# EUROPÄISCHE PATENTSCHRIFT

(11) **EP 0 494 165 B1**
(45) Veröffentlichungstag und Bekanntmachung des Hinweises auf die Patenterteilung: **16.06.1993**
(21) Anmeldenummer: 90913178.1
(22) Anmeldetag: 04.08.1990
(51) Int. Cl.: B23Q 7/14, B23Q 7/18

(54) **VERFAHREN ZUM FERTIGEN VON WERKSTÜCKEN, INSBESONDERE VON FAHRZEUG-ANTRIEBSAGGREGATEN, SOWIE EINRICHTUNG ZUR DURCHFÜHRUNG DES VERFAHRENS**
PROCESS AND DEVICE FOR FINISHING WORKPIECES, IN PARTICULAR VEHICLE DRIVE UNITS
PROCEDE ET DISPOSITIF POUR FABRIQUER DES PIECES, NOTAMMENT DES GROUPES MOTOPROPULSEURS DE VEHICULES

(30) Priorität: 25.08.1989 DE 3928139
(43) Veröffentlichungstag der Anmeldung: 15.07.1992
(73) Patentinhaber: AUDI AG, 85045 Ingolstadt (DE)
(72) Erfinder: MOTZET, Josef, D-8070 Ingolstadt (DE); MÜLLER, Karl, D-8070 Ingolstadt (DE)
(74) Vertreter: Geissler, Manfred
(86) Internationale Anmeldenummer: EP9001282
(87) Internationale Veröffentlichungsnummer: WO9102623

(56) Entgegenhaltungen:
- FR-A- 2 512 722
- FR-A- 2 627 120
- GB-A- 2 004 781
- US-A- 4 629 384
- Patent Abstracts of Japan, Band 4, Nr. 68 (M-12)(550), 21 Mai 1980, & JP-A-5531530 (TOYODA KOKI K.K.)
- Patent Abstracts of Japan, Band 5, Nr. 155 (M-90)(827), 30 September 1981, & JP-A-5682156 (TOYODA KOKI K.K.)
- Patent Abstracts of Japan, vol. 6, No. 201 (M-163)(1079), 13 October 1982, & JP-A-57107757 (TOYOKDA KOKI K.K.).
- Patent Abstracts of Japan, vol. 10, No. 18 (M-448)(2075), 24 January 1986, & JP-A-60177839 (TOYODA KOKI K.K.).

## Beschreibung

Die Erfindung bezieht sich auf ein Verfahren zum Fertigen von Werkstücken mit den weiteren Merkmalen nach dem Oberbegriff des Patentanspruches 1 sowie auf eine zu dessen Durchführung besonders geeignete Einrichtung nach dem Oberbegriff des Patentanspruches 3.

Mit dem Bericht "Flexible Fertigung von Serien-Dieselmotoren" in der VDI-Zeitschrift, Band 126 (1984), Nr. 9 - Mai, Seite 311 ff, wird ein Fertigungsverfahren mit einem flexiblen Fertigungssystem zur Bearbeitung von Varianten eines in verschiedenen Fahrzeugmodellen verwendeten Dieselmotors vorgestellt. Der grundsätzliche Anlagenaufbau ist eine flexible Verkettung mit Quertransport- und Ausschleusstationen für die die Werkstücke tragenden Werkstückpaletten.
Mit dem zum Einsatz kommenden Werkstücktransport- und Maschinensystem werden Zylinderköpfe und Zylinderblöcke von Motoren spanend bearbeitet. In einer vorgeschalteten Spannstation werden die Werkstücke in einer vorwählbaren Aufspannung auf einem Werkstückträger fixiert, um danach den einzelnen Bearbeitungsstationen zugeführt zu werden. Eine hinsichtlich der Bearbeitungsmöglichkeiten sehr flexible aber vom konstruktiven Aufbau her gesehen auch sehr aufwendige Bearbeitungsstation ist mit der Nr. 9 beziffert. Dieses Bearbeitungszentrum weist drei werkzeuggebundene Achsen auf, während eine vierte Achse in einem Schalttisch und eine fünfte Achse in einer Schwenkeinrichtung für den Schalttisch angeordnet sind. Mit diesem Fünf-Achsen-Bearbeitungszentrum können sämtliche im System vorkommenden Bearbeitungsoperationen ersatzweise ausgeführt werden.
Im Bericht wird als besonderer Vorteil hervorgehoben, daß mit dieser Anlage mit verhältnismäßig geringem Investitionsaufwand eine kurzfristige Umstellung auf neue Teilevarianten möglich ist. Diese Bearbeitungsflexibilität wird durch Bearbeitungszentren und ein flexibles Transportsystem erreicht.

Im Grunde genommen entsprechen die erwähnten Quertransport- und Ausschleusstationen der Fertigungsanlage den Bypaßlinien anderer bekannter Serienfertigungseinrichtungen von Antriebsaggregaten, die beispielsweise dann erforderlich sind, wenn z. B. Reihen- und V-Motoren über eine gemeinsame Einrichtung gefertigt werden sollen. Es handelt sich dabei um Fertigungsanlagen, bei denen entweder die reihenspezifischen- bzw. die V-spezifischen Fertigungsbereiche über die Bypaßlinien laufen, so daß nur sehr geringe Teilbereiche über die eigentliche gemeinsame Fertigungsanlage laufen. Die bearbeitungsspezifischen Unterschiede der Teilefamilien-Mitglieder werden in der Regel durch die unterschiedliche und daran angepaßte Anordnung der Fertigungsstationen in den Bypaßlinien bzw. Ausschleusstationen gelöst. Daher sind in der Regel eine große Anzahl von Bypaßlinien bzw. Ausschleusstationen und meist aufwendige Maschinenanordnungen an den Bearbeitungsstationen erforderlich, denen die Antriebsaggregate auf einer Seitenfläche stehend, d. h. also mit horizonal gerichteter Längsachse zugeführt werden.

Mit der beschriebenen Fertigungsanlage ist zwar eine Möglichkeit geschaffen, die zu fertigende Typenpalette zu vergrößern und dazu die Flexibilität der Anlage zu erhöhen. Dies geht allerdings einher mit dem Verlust des Transferstraßen-Charakters. Dies bedeutet, daß die Fertigungsanlage für eine auf hohe Stückzahlen ausgerichtete, hochproduktive Massenfertigung, wie sie auf Transferstraßen üblich ist, nicht geeignet ist, weil höhere Investitionen und auch ein größerer Platzbedarf erforderlich sind, so daß die Wirtschaftlichkeit in Frage zu stellen ist.

Bei letztgenannten Fertigungseinrichtungen, also Transferstraßen, wie beispielsweise in der FR-A 26 27 120 beschrieben, ist nicht jedem Werkstück ein eigener Werkstückträger zugeordnet, sondern diese Werkstücke sitzen unmittelbar auf einem Transportsystem (Kettenbänder, Rollenbänder oder dergleichen) auf und werden lediglich in den einzelnen Bearbeitunsstationen fixiert und verspannt. Dabei sind die Fertigungseinrichtungen dem Werkstück zu- bzw. untergeordnet. Von einer einheitlichen Spannlage des Werkstückes ausgehend ergibt sich die darauf abgestimmte Anordnung der Fertigungseinrichtung zwingend. Dies hat zur Folge, daß häufig eine aufwendige Schrägstellung zu einem Maschinenbett gewählt werden muß.

In der FR-A 26 27 120 ist die Fertigung eines Fahrzeugantriebsaggregates beschrieben, welches zu einer Längsachse im wesentlichen parallel verlaufende Seitenflächen sowie dazu im wesentlichen senkrecht gerichtete Stirnflächen aufweist und auf einer Seitenfläche stehend, d. h. also mit horizontal gerichteter Längsachse, den einzelnen Fertigungsstationen zugeführt wird. Dort wird es über geeignete Mittel auf der Seitenfläche stehend geschwenkt.

Von einem solchen Fertigungssystem ausgehend ist es die Aufgabe der vorliegenden Erfindung, ein Verfahren zum Fertigen von Werkstücken, nämlich von Fahrzeug-Antriebsaggregaten, aufzuzeigen, welches bei geringem Aufwand ein Höchstmaß an Fertigungs-Flexibilität zuläßt und gleichzeitig für eine hochproduktive Massenfertigung geeignet ist.

Diese Aufgabe wird erfindungsgemäß durch den Patentanspruch 1 gelöst. Patentanspruch 3 zeigt für die Durchführung des Verfahrens besonders geeignete Mittel auf.

Besonders vorteilhafte Weiterbildungen ergeben sich aus Maßnahmen, wie sie in den Unteransprüchen dargelegt sind.

Beim erfindungsgemäßen Fertigungsverfahren sind im hohem Maße alle Teilbereiche der Fertigungseinrichtungen stets im Einsatz, und zwar in normaler 90°-Anordnung zu den Mitteneinheiten, so daß die Bearbeitungen immer in dieser Lage ausgeführt werden können, unabhängig davon, ob beispielsweise Reihen- oder V-Motoren oder ähnliche Teile zu bearbeiten sind. Dies ergibt sich aus dem wesentlichen Merkmal der Erfindung, d. h. der besonderen Werkstückposition mit verikal gerichteter Längsachse und der Verschwenkbarkeit um diese Längsache, so daß damit der weitaus größte Teil der Bearbeitungsvorgänge erfolgen kann.

Zwar ist es aus der DE-A 37 21 160 bereits bekannt, für einen speziellen Bearbeitungsvorgang an einem Zylinderblock diesen auf einer seiner Stirnflächen stehend zu spannen. Für das nunmehr vorgeschlagene erfindungsgemäße Fertigungsverfahren waren aus diesem Stand der Technik allerdings keine Anregungen ableitbar, die eine solche Werkstückausrichtung für nahezu den gesamten Fertigungsablauf hätten nahelegen können. Die Ausricht-Bohrvorrichtung nach der Offenlegungsschrift sieht eine vertikale Vorschubbewegung des Bohrwerkzeuges vor, um, an der Stirnseite des Motorblockes angreifend, nacheinander eine Anzahl von querliegenden Trennwänden bzw. deren Abschnitte zur Aufnahme von Kurbenwellenlagern zu bohren. Der Werkzeug-Vorschub ist dabei parallel zur Motor-Längsachse.
Beim erfindungsgemäßen Fertigungsverfahren hingegen erfolgt in dieser Werkstückposition die Werkzeug-Zustellbewegung bzw. -Vorschubbewegung horizontal. Auch werden nicht die Stirnseiten des Werkstückes bearbeitet, sondern es lassen sich an sämtlichen Seitenflächen alle notwendigen Bearbeitungen ausführen. .

Ein wesentliches Kriterium des erfindungsgemäßen Fertigungsverfahrens ist es, daß sich der jeweiIigen Bearbeitungsmaschine als Basis das Werkstück absolut unterordnet, ohne daß es einer jedem Werkstück zugeordneten und dieses tragenden Spannbasis bedarf, wie sie im gattungsbildenden Stand der Technik gezeigt ist.

Die besondere Bearbeitungsposition des Werkstückes erlaubt überdies eine wesentliche Reduzierung des werkzeugseitigen Aufwandes, da die Fertigungsmaschinen in der Regel lediglich einen einachsigen Arbeitsbereich benötigen.

Die Durchführung des erfindungsgemäßen Verfahrens wird dadurch möglich, daß die Werkstücke mit einer besonderen Justierung ausgestattet sind, die für die jeweilige Bearbeitung der einzelnen Seitenflächen eine exakt definierbare Werkstückpositionierung zulassen.
Anstatt die im Stand der Technik bekannten Justierflächen an Werkstück-Seitenflächen mit einer Anschlagfläche an einer Stirnseite vorzusehen, werden nun nur noch an einer Werkstück-Stirnseite eine bestimmte Anzahl von Justierbohrungen mit Flanschflächen angebracht. Jede Justierbohrung ist als Stufenbohrung ausgelegt, wobei eine äußere, im Querschnitt größere Grundbohrung bereits durch den Gußteilelieferanten eingebracht wird. Eine innere, im Querschnitt kleinere Paßbohrung wird zunächst vorbearbeitet, um danach unter Berücksichtigung von Veränderungen des Werkstückes durch Spannungen im Rohteil auf das Paßmaß (mit z. B. um einen Millimeter kleineren Durchmesser als die Grundbohrung) fertig bearbeitet zu werden. Die jeder Justierbohrung zugeordnete Flanschfläche wird beim Gießen des Rohteiles etwa 0,5 mm tiefer als das Fertigmaß der Stirnflächen angesenkt, so daß die genaue Position der Justierung auch noch nach der Fertigbearbeitung nachvollziehbar ist.

Das erfindungsgemäße Verfahren in Verbindung mit der dabei zum Einsatz kommenden besonderen Werkstück-Justierung erleichtert auch die Gestaltung der erforderlichen Spannvorrichtungen an den einzelnen Fertigungsstationen.

Die Erfindung ist nachstehend anhand eines Ausführungsbeispieles beschrieben und in der Zeichnung dargestellt. Diese zeigt in
- **Fig. 1**: ein Zylinderblock eines Verbrennungsmotors in Bearbeitungsposition I, bei der er auf einer seiner Stirnseiten aufliegt,
- **Fig. 2**: den Zylinderblock in seiner Bearbeitungsposition II, bei der er auf einer seiner Seitenflächen (ölwannenseitig) aufliegt,
- **Fig. 3**: eine Einzeldarstellung einer der aus Fig. 2 ersichtlichen Justierbohrungen,
- **Fig. 4**: eine Transferstraße mit einzelnen Fertigungsstationen,
- **Fig. 5**: eine schematisierte Darstellung einer Werkstückübergabe- und Schwenkvorrichtung und
- **Fig. 6**: eine Draufsicht auf die Abbildung gemäß Fig. 5

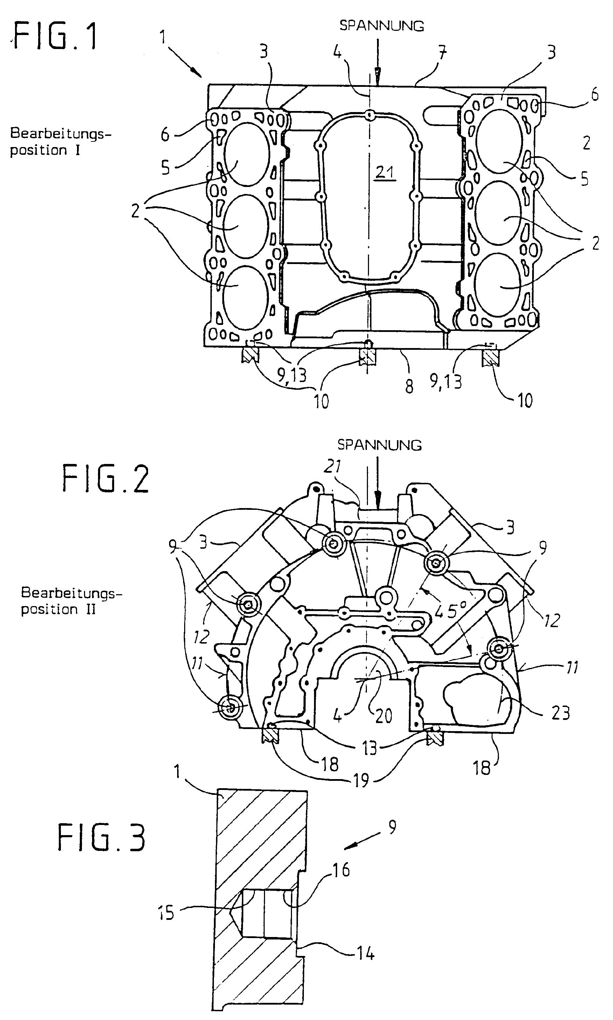

Ein in Fig. 1 dargestellter Zylinderblock 1 eines Sechszylinder-V-Motors weist im fertig bearbeiteten Zustand eine entsprechende Anzahl Zylinderbohrungen 2 auf, die in planen Kopfflächen 3 enden, auf die später ein Zylinderkopf aufgesetzt und befestigt wird. Die in dieser Bearbeitungsposition bearbeitbaren Seitenflächen 3,11,12,18,21 des Zylinderblockes 1 verlaufen stets im wesentlichen parallel zu seiner Längsachse 4. Die Kopfflächen 3 sowie die anderen Seitenflächen 11,12, 18,21 weisen eine Anzahl von Kanälen 5 und Gewindebohrungen 6 sowie sonstige Bohrungen usw. für den Kühlmitteldurchfluß, für den Schmiermittelkreislauf und zur Befestigung des Zylinderkopfes und weiterer Anbauteile auf. In etwa rechtwinklig zur Zylinderblock-Längsachse 4 verlaufen obere und untere Stirnflächen 7,8, in die im Verlaufe des Fertigungsprozesses ebenfalls noch einige diverse Bohrungen, Gewindebohrungen usw. für bestimmte Zwecke einzubringen sind.

Der Zylinderblock 1 sitzt mit seiner unteren Stirnfläche 8 im Bereich von Justierbohrungen 9 mit dort angebrachten Ansenkungen 14 (vgl. Fig. 3) auf drei in jeder Fertigungsstation 54-88 angeordneten Auflagern 10 auf und wird von oben mittels geeigneter Einrichtungen gespannt. Ein an jedem Auflager 10 angebrachter Paßstift 13 greift in die jeweilige Justierbohrung 9 ein, so daß der Zylinderblock 1 positionsgenau fixiert ist. Die Planflächen der vorzugsweise zylinderförmigen Auflager 10 sind mit ihrem Durchmesser den stirnflächenseitigen Ansenkungen 14 angepaßt.

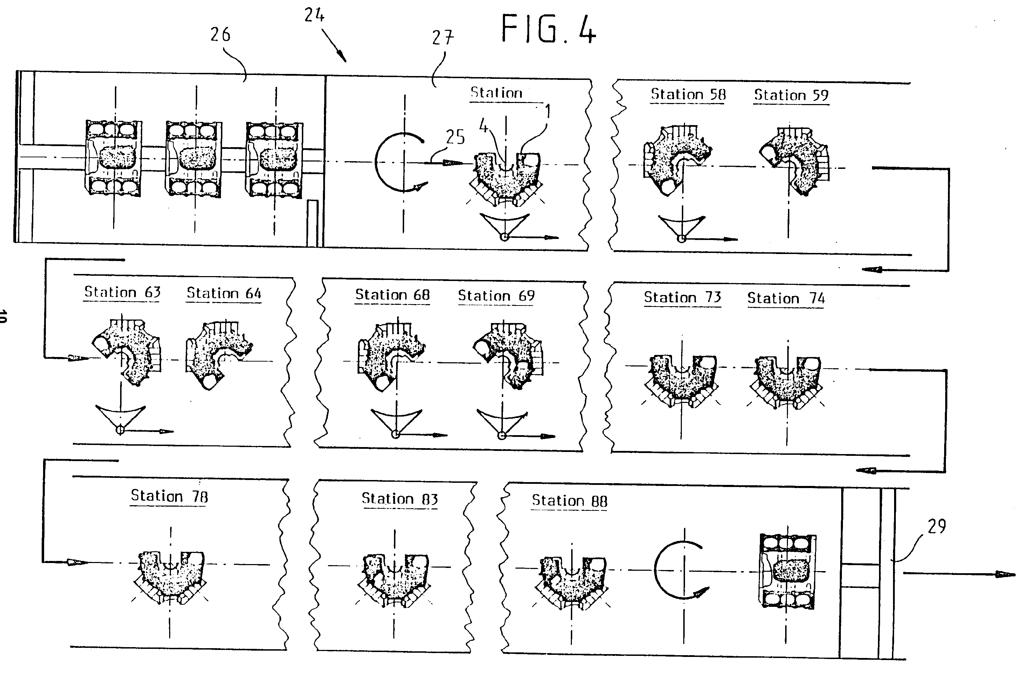

Wie aus Fig. 3 weiter hervorgeht, ist die Justierbohrung 9 zweistufig ausgeführt, wobei eine äußere, im Querschnitt größere Grundbohrung 16 der Aufnahme von entsprechend dimensionierten Fixierstiften 28 dient, die an einem den Zylinderblock 1 von der einen zur anderen Fertigungsstation tragenden Werkstücktransportsystem 27 angebracht sind, während eine innere, tiefere Paßbohrung 15 der Aufnahme des Paßstiftes 13 unmittelbar an der Fertigungsstation 50-88 dient. Der diesbezügliche Arbeitsablauf wird in Zusammenhang mit den Fig. 4 - 6 später erläutert werden.

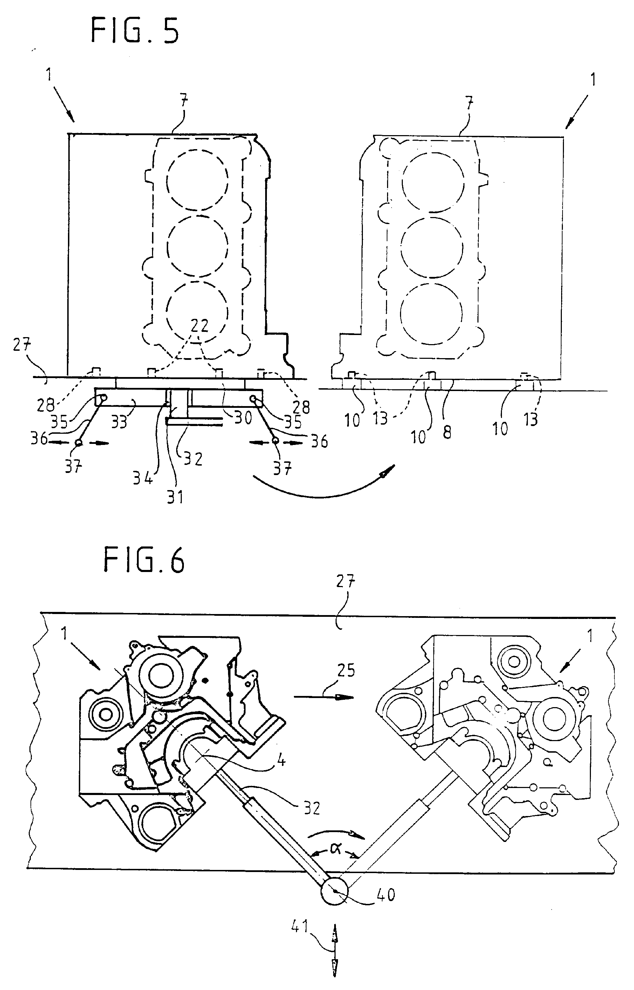

Wie aus Fig. 2 ersichtlich wird, sind im gezeigten Ausführungsbeispiel insgesamt fünf Justierbohrungen 9 vorgesehen, die bezüglich der Zylinderblock-Längsachse 4 im 45°-Raster an der äußeren Peripherie der unteren Stirnfläche 8 angeordnet sind.
Statt einer den Zylinderblock-Schwenkwinkeln entsprechenden 45°-Rasterung wäre auch jede andere Rasterung denkbar, z. B. 30° oder 60°, wobei ebenso möglich wäre, von der einen zur jeweils benachbarten Justierbohrung 9 eine andere Rasterung vorzusehen. Ebenso wäre jede andere beliebige Anzahl von Justierbohrungen möglich. Dies alles ist abhängig vom konstruktiven Grundaufbau des Zylinderblockes und der winkelbezogenen Anordnungsweise der zu bearbeitenden Flächen bzw. der einzubringenden Bohrungen usw. Der damit einhergehende Schwenkvorgang des Zylinderblockes 1 um seine Längsachse 4 ist in den Fig. 5 und 6 gezeigt.

In Fig. 2, die den Zylinderblock 1 in seiner Bearbeitungsposition II zur Bearbeitung der beiden Stirnflächen 7,8 zeigt und u. a. eine (halbrunde) Kurbelwellenbohrung 20 sowie eine Aufnahmebohrung 23 für den Anlasser des Verbrennungsmotors erkennen läßt, liegt der Zylinderblock 1 mit seiner bereits bearbeiteten ölwannenseitigen Planfläche 18 auf weiteren Auflagern 19 auf, die ebenfalls mit den bereits aus Fig. 1 bekannten Paßstiften 13 versehen sein können, um wiederum mit geeigneten Justierbohrungen zusammenzuwirken.

Das Einbringen der Justierbohrungen 9 erfolgt zweckmäßigerweise bereits in der Gießerei am unbearbeitenden Gußblock. Hierfür wird dieser mit geeigneter Hilfsmitteln in seiner X-Y- und Z-Ebene sowie bezüglich des V-Winkels der Zylinderbohrungen ausgerichtet, so daß die Justierbohrungen 9 mit den Ansenkungen 14 für die Auflager 10 in ihre jeweiligen Soll-Lagen eingebracht werden können. Geeignete Konturen des unbearbeitenden Gußblockes sind für diese Ausrichtung die Ausnehmungen für die Kurbelwellenbohrung sowie die Zylinderbohrungen.

Je nach Fertigungsart (Bohren, Fräsen usw.) und in Abhängigkeit von dem zu bearbeitenden Teilabschnitt des Werkstückes erfolgt die Werkzeugzustellung in bekannter Weise, z. B. mechanisch oder hydraulisch. Die Vorschubbewegung des Werkzeuges für den Bearbeitungsvorgang kann NC-gesteuert sein. Aufgrund der erfindungsgemäßen Ausrichtung und Schwenkbarkeit des Werkstückes lassen sich meist in normaler Anordnung (keine Schrägstellung) mit einachsigem Arbeitsbereich bei Werkzeug-Zustellung und -Vorschub z. B. sämtliche Teilefamilien von Reihen- und V-Motoren usw. auf einer Fertigungsstraße ohne Bypaßlinien bearbeiten.

Fig. 4 zeigt einen Ausschnitt aus einer Fertigungsstrafe 24 zur Bearbeitung der im wesentlichen parallel zur Zylinderblock-Längsachse 4 verlaufenden Seitenflächen, wobei auch die dort einzubringenden Bohrungen, Gewindebohrungen usw. gefertigt werden. Die einzelnen Bearbeitungseinheiten befinden sich in Werkstücktransportrichtung 25 gesehen auf der linken bzw. rechten Seite der Fertigungsstraße 24 und sind quer zur Werkstücktransportrichtung 25 ausgerichtet. Es werden dabei überwiegend horizontale Einheiten benötigt, in Ausnahmefällen Vertikaleinheiten.

Von einem Vorratspuffer 26 ausgehend werden in bekannter Weise die Zylinderblöcke 1 in einem vorgegebenen fixen Abstand zueinander dem eigentlichen Werkstücktransportsystem 27 zugeführt. Unmittelbar beim Verlassen des Vorratspuffers 26 wird über eine geeignete, hier nicht gezeigte Einrichtung der Zylinderblock 1, der zunächst auf der nicht bearbeiteten ölwannenseitigen Planfläche aufliegt in die Bearbeitungsposition I gebracht, wobei zwei am Transportsystem 27 jeweils vorgesehene Fixierstifte 28 (vgl. Fig. 5) in die Grundbohrungen 16 der zylinderblockseitigen Justierbohrungen 9 eingreifen und so den Zylinderblock 1 in einer vorgegebenen Position halten und insoweit auch eine gewisse Vorjustierung vornehmen.

Die Bearbeitungsschritte in den einzelnen in Fig. 4 gezeigten Stationen sind folgende:
Station 54 - Vorfräsen der ölwannenseitigen Planfläche 18,
Stationen 58 und 59 - Vorfräsen der Kopfflächen 3,
Stationen 63 und 64 - Vorbearbeiten der Zylinderbohrungen 2,
Stationen 68 und 69 - weitere Stationen (Reservestationen) zum Vorbearbeiten der Zylinderbohrungen 2,
Stationen 73 und 74 - Fräsen von ölwannenseitigen Lagerstegen und Flächen, wobei Station 74 als Reservestation dient,
Station 78 - Einbringen der halbrunden Kurbelwellenbohrung 20,
Station 83 - Fertigfräsen der ölwannenseitigen Planfläche 18 und
Station 88 - Einbringen von ölwannenseitigen Bohrungen.
Es versteht sich, daß in weiteren Zwischenstationen weitere Bearbeitungsvorgänge erfolgen.

Im Anschluß an Station 88, mit der bereits mehr als 90 % der gesamten Bearbeitungsvorgänge abgeschlossen sind, wird der Zylinderblock 1 auf hier nicht näher gezeigter Weise gedreht und dabei in die in Fig. 2 gezeigte Bearbeitungspostion II gebracht, in der die nun bearbeitete ölwannenseitige Planfläche 18 als Bezugsfläche dient. In dieser Position gelangt der Zylinderblock 1 in einen Zwischenpuffer 29, bevor er einen weiteren Abschnitt der Fertigungsstraße zugeführt wird, in der noch die beiden Stirnflächen 7,8 einer Bearbeitung unterzogen werden.

Dieser Abschnitt der Fertigungsstraße 24 ist allerdings relativ kurz, da, wie oben erwähnt, der weitaus größte Teil der Bearbeitungsvorgänge in den Stationen 54 bis 88 vorgenommen wurde.

Die Fig. 5 und 6 zeigen in zwei Ansichten und in schematisierter Darstellung ein Ausführungsbeispiel einer Vorrichtung zum Übergeben und gleichzeitigen Verschwenken des Zylinderblockes 1 im Bereich einer Fertigungsstation. Zu diesem Zweck ist ein Auflagetisch 30 mit zwei Fixierstiften 22 vorgesehen. Der Auflagetisch weist weiterhin einen konzentrisch angeordneten und nach unten ragenden Achszapfen 31 auf, wobei mit letzterem ein Schwenkarm 32 drehfest gekoppelt ist. Der Auflagetisch 30 sitzt auf einem Basisrahmen 33 auf, wobei der genannte Achszapfen 31 durch eine entsprechend dimensionierte Bohrung 34 des Basisrahmens 33 hindurchragt. Dieser ist endseitig an Anlenkstellen 35 mit Schwingen 36 gekoppelt, deren jeweils anderes Ende 37 beispielsweise mittels geeigneter hydraulischer Elemente in Pfeilrichtung bewegbar ist. Damit kann erreicht werden, daß der Basisrahmen 33 und mit ihm der den Zylinderblock 1 tragende Auflagetisch 30 mehr oder weniger geringfügig aus der Ebene des Werkstück-Transportsystem 27 heraus anhebbar bzw. nach unten absenkbar ist. Damit sind auch die Justierbohrungen 9 bzw. deren Grundbohrungen 16 mit den bereits erwähnten transportsystemseitigen Fixierstiften 28 und den auflagetischseitigen Fixierstiften 22 wechselseitig in und außer Eingriff bringbar.

Der Schwenkarm 32 ist teleskopartig ausgebildet und in einer vertikal gerichteten, seitlich am Werkstück-Transportsystem 27 angeordneten Schwenkachse 40 gelagert. Wie durch den Doppelpfeil 41 gezeigt, ist die Schwenkache 40 (vorzugsweise mittels geeigneter hydraulischer Stellelemente) quer zur Werkstücktransportrichtung 25 bewegbar. Dies hat zur Folge, daß beim Überführen des Zylinderblockes 1 von seiner in dicker Vollinie gezeigten Position in die in dünner Vollinie gezeichnete Position der Schwenkarm 32 einen unterschiedlich großen Schwenkwinkel α überstreicht. Dieser entspricht dem Winkel, um dem sich letztlich der Zylinderblock 1 um seine Längsachse 4 dreht. In der Darstellung nach Fig. 6 sind dies 90°.

Vor dem Einleiten der Schwenkbewegung wird zunächst der Auflagetisch 30 mit den genannten Mitteln angehoben, um die Grundbohrungen 16 außer Eingriff mit den transportsystemseitigen Fixierstifen 28 zu bringen.

Gleichzeitig greifen dabei die auflagetischseitigen Fixierstifte 22 in andere Grundbohrungen ein, so daß der Zylinderblock 1 während der Schwenkbewegung fixiert ist. Nachdem der Schwenkvorgang beendet ist, wird der Auflagetisch 30 wieder abgesenkt, so daß die an den Auflagern 10 der Fertigungsstation angeordneten Paßstifte 13 in die Paßbohrungen 15 in dem Maße eingreifen können, wie durch die Abwärtsbewegung des Auflagetisches 30 der Kontakt seiner Fixierstife 22 mit den Grundbohrungen 16 verloren geht.
Nachdem der Zylinderblock 1 diese Bearbeitungspostion erreicht hat, kann er verspannt werden.
Somit ist der Zylinderblock 1 während des gesamten Fertigungsablaufes fixiert, so daß ihm unmittelbar zugeordnete und ihn tragende und gleichzeitig spannende Werkzeugträger entbehrlich sind.

Es versteht sich, daß die Erfindung auch bei der Fertigung von anderen Teilen von Fahrzeug-Antriebsaggregaten, wie z. B. Zylinderköpfe, Getriebe usw. anwendbar ist.

## Patentansprüche

1. Verfahren zum Fertigen von Werkstücken (1), nämlich Teilen von Fahrzeug-Antriebsaggregaten, in einer als Transferstraße ausgeführten Fertigungsstraße (24), wobei das Werkstück (1) zu einer Längsachse (4) im wesentlichen parallel verlaufende Seitenflächen (3,11,12,18,21) sowie dazu im wesentlichen senkrecht gerichtete Stirnflächen (7,8) aufweist und mit einer dieser Flächen auf einem Werkstück-Transportsystem (27) der Fertigungsstraße (24) aufsitzt, den einzelnen Fertigungsstationen (50 - 88) zugeführt wird und über dem Transportsystem (27) bzw. den Fertigungsstationen (50 - 88) zugeordnete Mittel geschwenkt in der jeweils erforderlichen Bearbeitungsposition zur Lage kommt sowie fixiert und gespannt wird, **dadurch gekennzeichnet,** daß zur Bearbeitung der Seitenflächen (3,11, 12,18,21) und von diesen aus zugänglichen Teilbereichen (2,5,6,20) des Werkstückes (1) dieses mit vertikaler Ausrichtung seiner Längsachse (4) auf dem Transportsystem (27) aufsitzt und für Bearbeitungszwecke um diese Längsachse (4) geschwenkt wird.

2. Verfahren nach Patentanspruch 1, **dadurch gekennzeichnet,** daß zum Bearbeiten der Stirnflächen (7,8) das Werkstück (1) bei horizontal gerichteter Längsachse (4) auf einer seiner bearbeiteten Seitenflächen (18) aufliegend weiteren Fertigungsstationen zugeführt und dort fixiert und gespannt wird.

3. Einrichtung zur Durchführung des Verfahrens nach Patentanspruch 1, mit einer als Transferstraße ausgeführten Fertigungsstraße (24) und Werkstücken (1), nämlich Teilen von Fahrzeug-Antriebsaggregaten, wobei jedes Werkstück zu einer Längsachse (4) im wesentlichen parallel verlaufende Seitenflächen (3,11,12,18,21) sowie dazu im wesentlichen senkrecht gerichtete Stirnflächen (7,8) aufweist, mit einer dieser Flächen auf einem Werkstück-Transportsystem (27) der Fertigungsstraße aufsitzend den einzelnen Fertigungsstationen (50 - 88) zuführbar ist und über dem Transportsystem und den Fertigungsstationen zugeordnete Mittel in die jeweils erforderliche Bearbeitungsposition schwenkbar und in dieser Position fixier- und spannbar ist, **dadurch gekennzeichnet,** daß das Werkstück (1) an einer seiner Stirnflächen (8) eine Anzahl von Justierbohrungen (9) aufweist, die auf einer Kreislinie mit der Werkstück-Längsachse (4) als Mittelpunkt an der äußeren Peripherie der Stirnfläche (8) angeordnet sind und jeweils eine im Querschnitt größere Grundbohrung (16) zur Aufnahme von Fixierstiften (22,28) sowie eine im Querschnitt kleinere, aber tiefere Paßbohrung (15) zur Aufnahme von Paßstiften (13) auf weisen, während an den dem Werkstücktransportsystem (27) sowie der Fertigungsstation (54-88) zugeordneten Mitteln (30-37), die zum Übergeben des Werkstückes mit vertikaler Ausrichtung seiner Längsachse und Verschwenken um diese Längsachse ausgebildet sind, in die Grundbohrungen (16) eingreifende Fixierstifte (28,22) und an der Fertigungsstation selbst (50-88) in die Paßbohrungen (15) eingreifende Paßstifte (13) vorgesehen sind.

4. Einrichtung nach Patentanspruch 3, **dadurch gekennzeichnet,** daß die Justierbohrungen (9) bezüglich der Werkstück-Längsachse (4) eine gleiche oder unterschiedliche auf den Schwenkwinkel bezogene Rasterung (z. B. 30°,45°,60°) aufweisen.

5. Einrichtung nach Patentanspruch 3, **dadurch gekennzeichnet,** daß die Paßstifte (13) an vorzugsweise zylinderförmigen Auflagern (10) der Fertigungsstation (50-88) vorgesehen sind, auf die das Werkstück (1) mit stirnflächenseitigen Ansenkungen (14) aufsetzbar ist.

6. Einrichtung nach Patentanspruch 3, **dadurch gekennzeichnet,** daß die den Fertigungsstationen (50-88) zugeordneten Mittel zum Übergeben und Verschwenken des Werkstückes (1) einen Auflagetisch (30) mit Fixierstiften (22) beinhalten, wobei der Auflagetisch (30) einen nach unten ragenden Achszapfen (31) aufweist, der mit einem Schwenkarm (32) drehfest gekoppelt ist, während der Auflagetisch (30) auf einem Basisrahmen (33) aufsitzt, der über an Anlenkstellen (35) angreifende Schwingen (36) heb- und absenkbar ist, daß weiterhin der am Achszapfen (31) angreifende Schwenkarm (32) teleskopartig ausgebildet und in einer vertikal gerichteten, seitlich am Werkstück-Transportsystem (27) angeordneten Schwenkachse (40) gelagert ist, wobei die Schwenkachse (40) quer zur Werkstücktransportrichtung (25) bewegbar und fixierbar ist.

## Revendications

1. Procédé de fabrication de pièces usinées (1), à savoir d'éléments de groupes moteurs de véhicules, dans une chaîne de production (24) réalisée sous forme de chaîne transfert, la pièce (1) présentant des surfaces latérales (3, 11, 12, 18, 21) qui s'étendent en direction essentiellement parallèle à un axe longitudinal (4), ainsi que des surfaces frontales (7, 8) qui sont essentiellement dirigées perpendiculairement à cet axe, et reposant par l'une de ces surfaces sur un système de transport de pièces (27) de la chaîne de production (24), la pièce étant amenée dans les différents postes d'usinage (50 - 88) et étant mise en place dans la position d'usinage chaque fois nécessaire par pivotement sous l'action de moyens associés au système de transport (27) ou aux postes d'usinage (50 - 88), puis fixée et serrée dans cette position, caractérisé en ce que, pour l'usinage des surfaces latérales (3, 11, 12, 18, 21) et de zones partielles (2, 5, 6, 20) de la pièce (1) accessibles à partir de ces surfaces latérales, la pièce repose sur le système de transport (27) avec une orientation verticale de son axe longitudinal (4) et subit un mouvement pivotant autour de cet axe longitudinal (4) à des fins d'usinage.

2. Procédé selon la revendication 1, caractérisé en ce que, pour l'usinage des surfaces frontales (7, 8), la pièce est amenée, avec son axe longitudinal (4) dirigé horizontalement et tout en reposant par l'une de ses surfaces latérales usinées (18), dans d'autres postes d'usinage et elle y est fixée et serrée.

3. Dispositif pour l'exécution du procédé selon la revendication 1, avec une chaîne de production (24) réalisée sous forme de chaîne transfert et des pièces à usiner (1), à savoir des éléments de groupes moteurs de véhicules, chaque pièce (1) présentant des surfaces latérales (3, 11, 12, 18, 21) qui s'étendent en direction essentiellement parallèle à un axe longitudinal (4), ainsi que des surfaces frontales (7, 8) qui sont essentiellement dirigées perpendiculairement à cet axe, chaque pièce pouvant être amenée dans les différents postes d'usinage (50 - 88) en reposant par l'une de ces surfaces sur un système de transport de pièces (27) de la chaîne de production (24) et pouvant être mise en place dans la position d'usinage chaque fois nécessaire par pivotement sous l'action de moyens associés au système de transport (27) et aux postes d'usinage (50 - 88), puis fixée et serrée dans cette position, caractérisé en ce que la pièce à usiner (1) présente, sur l'une de ses surfaces frontales (8), un certain nombre de forures de positionnement (9) qui sont disposées à la périphérie extérieure de la surface frontale (8) sur un cercle ayant pour centre l'axe longitudinal (4) de la pièce et qui présentent chacune une forure de base (16) de plus grande section pour recevoir des broches de fixation (22, 28), ainsi qu'une forure d'ajustage (15), de plus petite section mais plus profonde, pour recevoir des broches d'ajustage (13), tandis qu'il est prévu, sur les moyens (30-37) qui sont associés au système de transport de pièces (27) et au poste d'usinage (54-88) et qui sont réalisés de manière à délivrer la pièce avec une orientation verticale de son axe longitudinal et à la faire pivoter autour de cet axe longitudinal, des broches de fixation (28, 22) qui s'engagent dans les forures de base (16) et, dans le poste d'usinage lui-même (50-88), des broches d'ajustage (13) qui s'engagent dans les forures d'ajustage (15).

4. Dispositif selon la revendication 3, caractérisé en ce que les forures de positionnement (9) présentent, par rapport à l'axe longitudinal (4) de la pièce, un espacement mutuel, rapporté à l'angle de pivotement, qui est égal ou différent (par exemple de 30°, 45°, 60°).

5. Dispositif selon la revendication 3, caractérisé en ce que les broches d'ajustage (13) sont prévues sur des supports (10), de préférence cylindriques, du poste d'usinage (50-88), sur lesquels la pièce à usiner (1) peut reposer par des fraisures (14) formées dans ses surfaces frontales.

6. Dispositif selon la revendication 3, caractérisé en ce que les moyens associés aux postes d'usinage (50-88) pour délivrer et faire pivoter la pièce à usiner (1) comprennent une table porte-pièce (30) avec des broches de fixation (22), la table (30) présentant un tourillon (31) qui fait saillie vers le bas et est accouplé rigidement à un bras oscillant (32), tandis que la table (30) repose sur un bâti (33) qui peut effectuer un mouvement vers le haut et vers le bas sous l'action de bielles oscillantes (36) en prise avec des points d'articulation (35), et en ce que le bras oscillant (32) agissant sur le tourillon (31) est réalisé sous forme télescopique et est monté sur un axe de pivotement (40) dirigé verticalement et disposé d'un côté du système de transport des pièces (27), l'axe de pivotement (40) étant mobile perpendiculairement à la direction de transport des pièces et pouvant être fixé.

## Claims

1. A process for fabricating workpieces (1), namely components of vehicle drive units, in a production line (24) constructed as a transfer line, wherein the workpiece (1) has side faces (3, 11, 12, 18, 21) running substantially parallel to a longitudinal axis (4) and end faces (7, 8) directed substantially perpendicular thereto and is seated with one of these faces on a workpiece conveyor system (27) of the production line (24), is fed to the individual manufacturing stations (50 - 88) and is swung by means associated with the conveying system (27) or the manufacturing stations (50 - 88), comes to rest in the particular machining position necessary and is fixed and clamped, characterised in that for machining the side faces (3, 11, 12, 18, 21) and for machining sectional regions (2, 5, 6, 20) of the workpiece (1) accessible from the side faces, the workpiece (1) is seated on the conveyor system (27) with its longitudinal axis (4) aligned vertically and is swung about this longitudinal axis (4) for machining purposes.

2. A process according to claim 1, characterised in that for machining the end faces (7, 8) the workpiece (1) is fed to further manufacturing stations lying on its machined side faces (18) with its longitudinal axis (4) aligned horizontally, and is fixed and clamped there.

3. A device for carrying out the process according to claim 1, with a production line (24) constructed as a transfer line, and workpieces (1), namely components of vehicle drive units, wherein each workpiece has side faces (3, 11, 12, 18, 21) running substantially parallel to a longitudinal axis (4) and end faces (7, 8) directed substantially perpendicularly thereto, can be fed to the individual manufacturing stations (50 - 88) with one of these faces seated on a workpiece conveyor system (27) of the production line and can be swung by means associated with the conveyor system and the manufacturing stations into the particular machining position required and can be fixed and clamped in this position, characterised in that the workpiece (1) has a number of adjustment holes (9) on one of its end faces (8), which holes are disposed on the outer periphery of the end face (8) in a circular line with the longitudinal axis (4) of the workpiece as the mid-point, each of which holes has a primary hole (16) of larger diameter for receiving positioning pins (22, 28) and an alignment hole (15), of smaller diameter but deeper, for receiving alignment pins (13), whilst positioning pins (28, 22) are provided engaging in the primary holes (16) and alignment pins (13) are provided engaging in the alignment holes (15) on the manufacturing station itself, on the means (30 - 37) which are constructed for delivering the workpiece with its longitudinal axis aligned vertically and for swinging it about this axis, and which are associated with the workpiece conveyor system (27) and with the manufacturing station (54 - 88).

4. A device according to claim 3, characterised in that the adjustment holes (9) have the same or a different spacing with respect to the angle of swivel (e.g. 30°, 45°, 60°) in relation to the longitudinal axis (4) of the workpiece.

5. A device according to claim 3, characterised in that the alignment pins (13) are provided on supports (10) of the manufacturing station (50 - 88) which are preferably cylindrical, on which supports the workpiece (1) can be placed by means of countersunk regions (14) in its end faces.

6. A device according to claim 3, characterised in that the means associated with the manufacturing station (50 - 88) for delivering and pivoting the workpiece (1) comprise a supporting table (30) with positioning pins (22), wherein the supporting table (30) has a downwardly projecting spindle (31) which is coupled rotationally fixed to a swivel arm (32), whilst the supporting table (30) is seated on a baseframe (33) which can be raised and lowered by means of oscillating cranks (36) engaging at pivot points (35), that further the swivel arm (32) engaging with the spindle (31) is of telescopic construction and is mounted with its swivelling axis (40) aligned vertically at the side of the workpiece conveyor system (27), wherein the swivelling axis (40) is movable transverse to the workpiece conveying direction (25) and can be fixed.
